# EUROPEAN PATENT SPECIFICATION

(11) **EP 3 624 608 B1**
(45) Date of publication and mention of the grant of the patent: **07.08.2024**
(21) Application number: 18727693.6
(22) Date of filing: 09.05.2018
(51) Int. Cl.: A24B 15/167, A24B 15/24

(54) **METHOD OF MAKING A TOBACCO EXTRACT**
VERFAHREN ZUR HERSTELLUNG EINES TABAKEXTRAKTS
PROCÉDÉ DE FABRICATION D'UN EXTRAIT DE TABAC

(30) Priority: 15.05.2017 GB 201707762
(43) Date of publication of application: 25.03.2020
(73) Proprietor: Nicoventures Trading Limited, London WC2R 3LA (GB)
(72) Inventor: SINTYUREVA, Marina, Lytham St. Annes FY8 1SB (GB); DIGARD, Helena, London Greater London WC2R 3LA (GB)
(74) Representative: Gill, Siân Victoria
(86) International application number: PCT/EP2018/062120
(87) International publication number: WO 2018/210678

(56) References cited:
- EP-B1- 1 915 064
- WO-A1-2015/107552
- US-A- 4 153 063
- US-A- 4 727 889
- US-A- 5 073 267

## Description

### Technical Field

The present invention relates to a method of making a tobacco extract and to the tobacco extract resulting from that process. The invention also provides cartridges containing the tobacco extract for use in a smoking article, and smoking articles comprising the tobacco extract.

### Background

Tobacco material is heated in smoking articles for the purpose of releasing substances contained in the material and delivering these as an aerosol.

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, material. The material may be, for example, tobacco or other non-tobacco products, which may or may not contain nicotine.

Electronic cigarettes or "e-cigarettes" are another product that has been formulated as an alternative to combustible products. These devices contain a volatilisble solution which generates an inhalable aerosol on heating. These solutions may contain components of tobacco. It is therefore useful to be able to selectively extract tobacco components.

EP1915064 describes a process for making reconstituted tobacco including a tobacco extraction step. The extraction process uses supercritical carbon dioxide to extract the tobacco components, and then contacts the supercritical carbon dioxide containing tobacco components with propylene glycol. The tobacco components transfer into the propylene glycol. The carbon dioxide is supercritical throughout.

### Summary

According to a first aspect of the present invention, there is provided a method of making a tobacco extract comprising;
(a) contacting tobacco with an extraction solvent such that tobacco components are extracted from the tobacco into the solvent, wherein the extraction solvent comprises a supercritical fluid;
(b) separating the residual tobacco solids from the supercritical extraction solvent containing tobacco components;
(c) exposing the extraction solvent containing tobacco components to conditions in a vessel at which the extraction solvent is subcritical, thereby releasing the tobacco components from the extraction solvent; and then
(d) washing the vessel with an entrapment solvent which dissolves the tobacco components, wherein the entrapment solvent comprises an aerosol generating agent.

Step (d) is initiated once separation of the extraction solvent and tobacco components is complete.

The inventors have established that variations in the extraction process using a supercritical extraction solvent result in variation in the tobacco extract composition and/or in the physical properties of the extract.

The transfer to subcritical conditions allows for efficient and effective separation of the tobacco components and extraction solvent. This means that the concentration of tobacco aromas and flavours components in the entrapment solvent is higher and the chemical make-up is different as compared to the process of EP1915064 (in which the extraction solvent is supercritical throughout). This improves the organoleptic properties of the extract.

Furthermore, the extract resulting from the EP1915064 process has a lower viscosity than that resulting from the process according to the present invention; this is because the carbon dioxide extraction solvent of EP1915064 contacts the propylene glycol entrapment solvent, and gaseous carbon dioxide becomes entrained in the propylene glycol. A higher viscosity extract is better for use in smoking articles because the extract is easier to handle and easier to contain/retain in the article.

The use of subcritical conditions for separation is also advantageous over a process in which the conditions are such that the extraction solvent is supercritical throughout because less energy is required to maintain the conditions. The process is therefore more energy efficient, cheaper to run and is quicker to set up.

In some cases, the entrapment solvent consists essentially or of consists of one or more aerosol generating agents.

In some cases, the extraction solvent used in the above process comprises carbon dioxide. In some cases, the extraction solvent consists essentially of or consists of carbon dioxide.

In some cases, the entrapment solvent used in the above method comprises a polyol. In some cases, the entrapment solvent comprises glycerol and/or propylene glycol. In some cases, the entrapment solvent consists essentially of or consists of glycerol.

In some cases, the tobacco components extracted by the methods described herein include one or more of nicotine and tobacco aromas and flavours.

In some cases, the method described herein may further comprise the step of providing the entrapment solvent containing dissolved tobacco components in a cartridge, wherein the cartridge is configured for use in a smoking article.

In some cases, step (a) and step (c) are completed in separate vessels. Step (a) may be completed in a first vessel (or extraction vessel) which is maintained throughout at a temperature and pressure at which the extraction solvent is supercritical. Step (c) may be completed in a second vessel (or separation vessel) which is maintained throughout at a temperature and pressure at which the extraction solvent is subcritical. In some cases, step (b) includes transfer of the extraction solvent containing tobacco components from the extraction vessel to the separation vessel.

According to a second aspect of the invention, there is provided a tobacco extract obtained by or obtainable by a method described herein.

According to a further aspect, there is provided a cartridge configured for use in a smoking article, the cartridge containing a tobacco extract obtained by or obtainable by a method described herein. The cartridge may be configured for use in an electronic cigarette.

According to a further aspect, there is provided a smoking article containing a tobacco extract obtained by or obtainable by a method described herein. In some cases, the smoking article may contain the tobacco extract in an insertable cartridge, the cartridge being configured for use in the smoking article. The smoking article may additionally comprise a mouthpiece. The smoking article may additionally comprise a heater which volatilises the entrapment solvent containing tobacco extract in use.

The smoking article may be an electronic cigarette.

According to a further aspect, there is provided the use of a tobacco extract obtained by or obtainable by a method described herein to generate an inhalable aerosol. In some cases, the tobacco extract is used in a smoking article to generate the inhalable aerosol.

Further features and advantages of the invention will become apparent from the following description of preferred embodiments of the invention, given by way of example only.

### Detailed Description

For the avoidance of doubt, the term "tobacco extract" as used herein refers to the entrapment solvent containing tobacco components.

A supercritical fluid is any substance at a temperature and pressure above its critical point, where distinct liquid and gas phases do not exist. Supercritical fluids can effuse through solids like a gas, and dissolve materials like a liquid. Supercritical fluids have a higher fluid density than gases and therefore have a higher solvent capacity.

In some cases, one or more flavours may be added to the tobacco extract. As used herein, the term "flavour" refers to materials which, where local regulations permit, may be used to create a desired taste or aroma in a product for adult consumers. They may include extracts (e.g., licorice, hydrangea, Japanese white bark magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamom, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, oil, liquid, or powder.

As used herein, an "aerosol generating agent" is an agent that promotes the generation of an aerosol on heating. An aerosol generating agent may promote the generation of an aerosol by promoting an initial vaporisation and/or the condensation of a gas to an inhalable solid and/or liquid aerosol.

In general, suitable aerosol generating agents include, but are not limited to: a polyol such as sorbitol, glycerol, and glycols like propylene glycol or triethylene glycol; a non-polyol such as monohydric alcohols, high boiling point hydrocarbons, acids such as lactic acid, glycerol derivatives, esters such as diacetin, triacetin, triethylene glycol diacetate, triethyl citrate or myristates including ethyl myristate and isopropyl myristate and aliphatic carboxylic acid esters such as methyl stearate, dimethyl dodecanedioate and dimethyl tetradecanedioate. In some cases, the aerosol generating agent comprises one or more of glycerol, propylene glycol, triacetin and isopropyl myristate, suitably glycerol and/or propylene glycol.

The weight ratio of aerosol generating agent to tobacco (dry weight) may be from about 2:1 to about 1:3, suitably from 3:2 to about 1:2, suitably about 1:1.

The method according to the invention may additionally comprise an initial step of adding water to the tobacco. The amount of water added may be from about 2% to about 20% based on the dry weight of tobacco, suitably from about 2%, 5% or 8% to about 12%, 15%, 18% or 20%. This pre-treatment with water increases the transfer of polar tobacco components (such as flavours) from the tobacco to the entrapment solvent.

In the process according to the invention, a higher pressure under supercritical conditions increases the solvent capacity and increases the efficiency of extraction. However, more energy is required to achieve and maintain higher pressures. Thus, the supercritical conditions are suitably selected to balance these conflicting requirements. Where the supercritical fluid comprises carbon dioxide, the pressure at which extraction occurs may, in some cases, be from about 8 MPa, 10 MPa, 15 MPa, 20 MPa or 25 MPa to about 85 MPa, 70 MPa, 55 MPa, 40 MPa or 30 MPa, suitably from 8-85 MPa, 15-40 MPa or 20-30 MPa. Where the supercritical fluid comprises carbon dioxide, the temperature at which extraction occurs may, in some cases, be from about 308K, 318K or 328K to about 473K, 430K, 390K or 350K, suitably from 308-473K, 308-430K, or 328-350K.

The transfer to subcritical conditions reduces the fluid density of the extraction solvent and consequently results in precipitation of the tobacco components. The conditions must be such that the pressure is below the critical pressure of the extraction solvent and/or the temperature is below the critical temperature of the extraction solvent. For thermal efficiency, the conditions are suitably such that the pressure is below the critical pressure of the extraction solvent while the temperature remains above the critical temperature.

The efficiency of separation of the tobacco components and the extraction solvent improves as the conditions move further below the critical point of the extraction solvent. However, the extraction solvent will typically be collected and stored after separation (requiring compression); in some cases, it may be recycled into an extraction chamber. Thus, the subcritical conditions are suitably not too far below the critical point to improve energy efficiency. The subcritical conditions are suitably selected to balance these conflicting requirements. Where the extraction solvent comprises carbon dioxide, the pressure at which separation occurs may, in some cases, be from about 3 MPa, 4 MPa, 5 MPa or 5.5 MPa to about 7.3 MPa, 7 MPa, 6.5 MPa, 6 MPa, 5.5 MPa or 5 MPa, suitably from 3-7.3 MPa, or 4-6 MPa. Where the extraction solvent comprises carbon dioxide, the temperature of the subcritical conditions under which separation occurs may, in some cases, be from about 280K, 300K, 320K or 330K to about 473K, 430K, 390K or 350K, suitably from 308-473K, 308-430K, or 328-350K.

### EXAMPLES

### Analytical methods

Water activity values reported below were measured at 24.9 - 25.2°C using the Aqualab Prewater Activity meter. The values were determined using the dewpoint method.

Viscosity values reported below were measured at 25°C using a Gemini Rheometer from Bohlin Instruments.

### Pre-extraction (pre-treatment of tobacco):

Ground Virginia tobacco leaf of the particle size ranging from 355µm to 3.5 mm was pre-treated by addition of water (10% of total tobacco weight). The mixture of tobacco and water was left for equilibration for 15 minutes post water addition (which is sufficient time for the water to be fully absorbed).

The pre-treated tobacco (1.2 kg plus 10wt% water) was placed in a stainless steel extraction basket and the basket placed in an extraction vessel (5L autoclave). The basket was closed at its ends by sinter metal plates (pore diameter 100 µm, pressure drop across the plate is no more than 1 bar), which distributed the supercritical fluid at the entrance and prevented egress of solid particles at the exit. The use of the basket also allowed the fast charge and discharge of the extraction vessel. The basket was sealed against the extraction vessel wall in order to prevent flow of the supercritical fluid around it.

### Example 1: Example of process according to the invention

The extraction vessel was linked to a separation vessel by a transfer line. A pressure regulation valve was present in the line. Carbon dioxide was pumped through the system at the rate of 10 kg / hr.

The extraction chamber was maintained at 26 MPa and 338K and the separation chamber was maintained at 4.5 MPa and 318K. Precipitation of the extract in the separation chamber was achieved by pressure and temperature reduction (from supercritical to subcritical conditions), which reduced the fluid density of the carbon dioxide and therefore the solvent-power of the CO₂. The extracted tobacco components were collected at the bottom of the separator.

Gaseous CO₂ exited the separator after passing through a liquid / gas divider (which removed any remaining liquid extract that is entrained in the gas). The CO₂ was collected and recycled into the extraction chamber.

The process was run for three hours and then the CO₂ flow was shut-off. The system was depressurised (to atmospheric conditions). The extracted tobacco components were collected at the bottom of the separator vessel. Glycerol (1.2 kg) was added to separation vessel and used to wash the separation vessel surfaces. The mixture of the extract and glycerol was stirred and then drained from the separator vessel and weighed.

### Comparative Test

A comparative test was run using the same apparatus as in example 1. However, the conditions were supercritical (26 MPa and 338K) throughout the apparatus. Further, rather than washing the separation chamber with glycerol at the end of the process, glycerol was simply provided in the separation chamber before the extraction was initiated and was present in the separation chamber throughout the process.

All other aspects of the comparative test were the same as in example 1.

The comparative test is a representative example of the processes described generally in EP1915064.

### Data

### Tobacco extract properties:

| Experiment | Nicotine (mg/g) | Water (wt%) | NNN (ng/g) | NNK (ng/g) | Viscosity (Pa s) | pH | Density (g/cm³) | Water activity (Aw) |
|---|---|---|---|---|---|---|---|---|
| Comp. test | 4.7 | 5.5 | 71.1 | 49.1 | 0.32 | 6.73 | 1.25 | 0.24 |
| Example 1 | 7.4 | 7.8 | 80.8 | 52.4 | 0.80 | 6.07 | 1.26 | 0.05 |

It can be seen that washing the separation chamber with glycerol at the end of the process alters the chemical and physical nature of the extract.

Similar results have been observed when using Oriental or Burley starting tobaccos.

It can be seen that the viscosity of the extract of example 1 is more than twice that obtained by a process similar to that of EP1915064 (i.e. the comparative test). A more viscous extract is easier to handle and retain in a smoking article.

Further, the inventors observed that the extract obtained in example 1 had a paler colour and was clearer than the extract obtained in the comparative test. This is because the nicotine content is lower in the extract obtained by example 1 than the content in the comparative extract.

Further, in the comparative test, tobacco waxes are entrained in the entrapment solvent providing colour to the extract, whereas in the claimed process, the waxes aggregate in the separation chamber. On washing with glycerol, the aggregated waxes are not broken up and are not entrained in the glycerol, further contributing to the clarity and pale colour of the extract.

The various embodiments described herein are presented only to assist in understanding and teaching the claimed features. These embodiments are provided as a representative sample of embodiments only, and are not exhaustive and/or exclusive.

## Claims

1. A method of making a tobacco extract comprising;
(a) contacting tobacco with an extraction solvent such that tobacco components are extracted from the tobacco into the solvent, wherein the extraction solvent comprises a supercritical fluid;
(b) separating residual tobacco solids from the supercritical extraction solvent containing tobacco components;
(c) exposing the extraction solvent containing tobacco components to conditions in a vessel at which the extraction solvent is subcritical, thereby releasing the tobacco components from the extraction solvent; and then
(d) flowing an entrapment solvent through the vessel, which entrapment solvent dissolves the tobacco components, wherein the entrapment solvent comprises an aerosol generating agent.

2. A method according to claim 1, wherein the supercritical fluid comprises carbon dioxide.

3. A method according to claim 2 wherein during step (a),
the temperature is in the range of about 308-473K, preferably 328-350K, and
the pressure is in the range of about 8-85 MPa, preferably 20-30 MPa.

4. A method according to any preceding claim, wherein the entrapment solvent comprises a polyol, such as glycerol and/or propylene glycol.

5. A method according to any preceding claim, wherein the tobacco components include one or more of nicotine and tobacco aromas and flavours.

6. A method according to any preceding claim, further comprising the step of providing the entrapment solvent containing dissolved tobacco components in a cartridge, wherein the cartridge is configured for use in a smoking article.

7. A tobacco extract obtainable by a method according to any one of claim 1 to 5.

8. A cartridge configured for use in a smoking article, the cartridge containing a tobacco extract according to claim 7.

9. A smoking article containing a tobacco extract according to claim 7.

10. Use of a tobacco extract obtainable by a method according to any one of claims 1 to 6 to generate an inhalable aerosol.

11. Use according to claim 10, wherein the tobacco extract is used in a smoking article.

## Patentansprüche

1. Verfahren zum Herstellen eines Tabakextrakts, umfassend;
(a) Inkontaktbringen von Tabak mit einem Extraktionslösungsmittel, so dass Tabakkomponenten aus dem Tabak in das Lösungsmittel extrahiert werden, wobei das Extraktionslösungsmittel ein überkritisches Fluid umfasst;
(b) Abtrennen restlicher Tabakfeststoffe aus dem Tabakkomponenten enthaltenden überkritischen Extraktionslösungsmittel;
(c) Aussetzen des Tabakkomponenten enthaltenden Extraktionslösungsmittels gegenüber Bedingungen in einem Gefäß, bei denen das Extraktionslösungsmittel unterkritisch ist, wodurch die Tabakkomponenten aus dem Extraktionslösungsmittel freigesetzt werden; und dann
(d) Strömenlassen eines Einschlusslösungsmittels durch das Gefäß, wobei das Einschlusslösungsmittel die Tabakkomponenten auflöst, wobei das Einschlusslösungsmittel ein Aerosol erzeugendes Mittel umfasst.

2. Verfahren nach Anspruch 1, wobei das überkritische Fluid Kohlendioxid umfasst.

3. Verfahren nach Anspruch 2, wobei während Schritt (a)
die Temperatur im Bereich von etwa 308-473 K, vorzugsweise 328-350 K, liegt und
der Druck im Bereich von etwa 8-85 MPa, vorzugsweise 20-30 MPa, liegt.

4. Verfahren nach einem vorhergehenden Anspruch, wobei das Einschlusslösungsmittel ein Polyol wie etwa Glycerol und/oder Propylenglykol umfasst.

5. Verfahren nach einem vorhergehenden Anspruch, wobei die Tabakkomponenten eines oder mehrere von Nikotin- und Tabakaromen und -geschmacksstoffen enthalten.

6. Verfahren nach einem vorhergehenden Anspruch, ferner umfassend den Schritt eines Bereitstellens des Einschlusslösungsmittels, das gelöste Tabakkomponenten enthält, in einer Kartusche, wobei die Kartusche zur Verwendung in einem Rauchartikel konfiguriert ist.

7. Tabakextrakt, erhaltbar durch ein Verfahren nach einem der Ansprüche 1 bis 5.

8. Kartusche, zur Verwendung in einem Rauchartikel konfiguriert, wobei die Kartusche einen Tabakextrakt nach Anspruch 7 enthält.

9. Rauchartikel, einen Tabakextrakt nach Anspruch 7 enthaltend.

10. Verwendung eines Tabakextraktes, der durch ein Verfahren nach einem der Ansprüche 1 bis 6 erhaltbar ist, zum Erzeugen eines inhalierbaren Aerosols.

11. Verwendung nach Anspruch 10, wobei der Tabakextrakt in einem Rauchartikel verwendet wird.

## Revendications

1. Procédé de fabrication d'un extrait de tabac comprenant ;
(a) la mise en contact de tabac avec un solvant d'extraction de sorte que des composants de tabac soient extraits du tabac dans le solvant, ledit solvant d'extraction étant un fluide supercritique ;
(b) la séparation de solides de tabac résiduels du solvant d'extraction supercritique contenant les composants de tabac ;
(c) l'exposition du solvant d'extraction contenant les composants de tabac à des conditions dans un récipient auxquelles le solvant d'extraction est sous-critique, libérant ainsi les composants de tabac du solvant d'extraction ; et ensuite
(d) la circulation d'un solvant de piégeage à travers le récipient, lequel solvant de piégeage dissout les composants de tabac, le solvant de piégeage comprenant un agent de génération d'aérosol.

2. Procédé selon la revendication 1, ledit fluide supercritique comprenant du dioxyde de carbone.

3. Procédé selon la revendication 2, durant l'étape (a),
ladite température étant comprise dans la plage d'environ 308-473 K, de préférence 328-350 K, et
ladite pression étant comprise dans la plage d'environ 8-85 MPa, de préférence 20-30 MPa.

4. Procédé selon une quelconque revendication précédente, ledit solvant de piégeage comprenant un polyol, tel que le glycérol et/ou le propylène glycol.

5. Procédé selon une quelconque revendication précédente, lesdits composants de tabac comprenant un ou plusieurs arômes et saveurs de nicotine et de tabac.

6. Procédé selon une quelconque revendication précédente, comprenant en outre l'étape de fourniture du solvant de piégeage contenant des composants de tabac dissous dans une cartouche, ladite cartouche étant configurée pour être utilisée dans un article à fumer.

7. Extrait de tabac pouvant être obtenu par un procédé selon l'une quelconque des revendications 1 à 5.

8. Cartouche configurée pour être utilisée dans un article à fumer, la cartouche contenant un extrait de tabac selon la revendication 7.

9. Article à fumer contenant un extrait de tabac selon la revendication 7.

10. Utilisation d'un extrait de tabac pouvant être obtenu par un procédé selon l'une quelconque des revendications 1 à 6 pour générer un aérosol inhalable.

11. Utilisation selon la revendication 10, ledit extrait de tabac étant utilisé dans un article à fumer.
